# EUROPEAN PATENT APPLICATION

(11) **EP 4 807 824 A1**
(43) Date of publication of application: **16.09.2026**
(21) Application number: 25888108.5
(22) Date of filing: 29.10.2025
(51) Int. Cl.: H01M 8/04746, H01M 8/0438

(54) **CONTROL SYSTEM AND CONTROL METHOD FOR FUEL CELL, AND STORAGE MEDIUM**

(30) Priority: 08.11.2024 CN 202411588234
(71) Applicant: SHENZHEN THREE-CIRCLE TECHNOLOGY CO., LTD., Guangdong 518000 (CN)
(72) Inventor: CHEN, Shuoshuo, Shenzhen, Guangdong 518000 (CN); ZHANG, Dongyu, Shenzhen, Guangdong 518000 (CN); JIAN, Guanping, Shenzhen, Guangdong 518000 (CN)
(74) Representative: Petraz, Gilberto Luigi
(86) International application number: PCT/CN2025/130876
(87) International publication number: WO 2026/098300

(57) **Abstract**

A fuel cell control system includes a detection device (101) and a control device (102). The detection device (101) is configured to detect fuel information of fuel, where the fuel is delivered to a fuel cell for power generation, and the fuel information includes a fuel flow rate and a fuel calorific value. The control device (102) is communicatively connected to the detection device (101), where the control device (102) is configured to: determine a target fuel flow rate at least based on a fuel calorific value at a current time point and a fuel flow rate at a previous time point; and control, based on the target fuel flow rate, a flow rate of the fuel delivered to the fuel cell to control the power generation of the fuel cell.

## Description

### TECHNICAL FIELD

The present disclosure relates to the technical field of fuel cells, and in particular, to a fuel cell control system, a fuel cell control method, and a storage medium.

### BACKGROUND

A fuel cell is a device that directly converts chemical energy of fuel into electrical energy. For instance, a solid oxide fuel cell (SOFC) can directly convert chemical energy stored in fuel and oxidants into electric energy at moderate and high temperatures in an efficient and environmentally friendly manner.

However, in a process of delivering the fuel to the fuel cell for power generation, a real-time state of the fuel is usually unstable, which can easily impair normal operation of the fuel cell. For example, different fuel sources may cause significant fluctuations in fuel components within a short period of time. If the fuel is continuously delivered to the fuel cell based on a fixed flow rate, local overheating of a stack of the fuel cell may occur, resulting in damage to a sealing structure and an electrode material of the stack.

### SUMMARY

To solve the above technical problems, embodiments of the present disclosure provide a fuel cell control system, a fuel cell control method, and a storage medium, which can timely adjust a flow rate of fuel delivered to a fuel cell and improve safety of the fuel cell during operation.

According to a first aspect, an embodiment of the present disclosure provides a fuel cell control system, including:
a detection device configured to detect fuel information of fuel, where the fuel is delivered to a fuel cell for power generation, and the fuel information includes a fuel flow rate and a fuel calorific value; and
a control device communicatively connected to the detection device, where the control device is configured to:
   determine a target fuel flow rate at least based on a fuel calorific value at a current time point and a fuel flow rate at a previous time point; and
   control, based on the target fuel flow rate, a flow rate of the fuel delivered to the fuel cell to control the power generation of the fuel cell.

Optionally, the determining a target fuel flow rate at least based on a fuel calorific value at a current time point and a fuel flow rate at a previous time point includes:
calculating a first product of a fuel calorific value at the previous time point and the fuel flow rate at the previous time point; and
determining the target fuel flow rate based on a ratio between the fuel calorific value at the current time point and the first product.

Optionally, the control device is further configured to:
determine a target fuel utilization rate and an output power of the fuel cell at the current time point, where the target fuel utilization rate includes a maximum allowable fuel utilization rate corresponding to the fuel cell or a preset fuel utilization rate during normal operation of the fuel cell; and
the determining a target fuel flow rate at least based on a fuel calorific value at a current time point and a fuel flow rate at a previous time point includes:
   determining a current fuel utilization rate of the fuel based on the fuel calorific value at the current time point, the fuel flow rate at the previous time point, and the output power of the fuel cell at the current time point; and
   in a case that the target fuel utilization rate is the maximum allowable fuel utilization rate, if the current fuel utilization rate is greater than the maximum allowable fuel utilization rate, determining the target fuel flow rate based on the fuel calorific value at the current time point, the target fuel utilization rate, and the output power of the fuel cell at the current time point; or if the current fuel utilization rate is less than or equal to the maximum allowable fuel utilization rate, taking a fuel flow rate at the current time point as the target fuel flow rate; or
   in a case that the target fuel utilization rate is the preset fuel utilization rate, if the current fuel utilization rate is not equal to the preset fuel utilization rate, determining the target fuel flow rate based on the fuel calorific value at the current time point, the target fuel utilization rate, and the output power of the fuel cell at the current time point.

Optionally, the determining a current fuel utilization rate of the fuel based on the fuel calorific value at the current time point, the fuel flow rate at the previous time point, and the output power of the fuel cell at the current time point includes:
calculating a second product of the fuel calorific value at the current time point and the fuel flow rate at the previous time point; and
determining the current fuel utilization rate of the fuel based on a ratio of the output power of the fuel cell at the current time point to the second product; and
the determining the target fuel flow rate based on the fuel calorific value at the current time point, the target fuel utilization rate, and the output power of the fuel cell at the current time point includes:
calculating a third product of the fuel calorific value at the current time point and the target fuel utilization rate; and
determining the target fuel flow rate based on a ratio of the output power of the fuel cell at the current time point to the third product.

Optionally, the control device is further configured to:
determine a minimum allowable flow rate corresponding to the fuel cell; and
the controlling, based on the target fuel flow rate, a flow rate of the fuel delivered to the fuel cell includes:
   controlling, based on a comparison result between the minimum allowable flow rate and the target fuel flow rate, the flow rate of the fuel delivered to the fuel cell, where if the target fuel flow rate is less than the fuel flow rate, the fuel is controlled to be delivered to the fuel cell at the minimum allowable flow rate; otherwise, the fuel is controlled to be delivered to the fuel cell at the target fuel flow rate.

Optionally, the fuel cell control system further includes a buffer device and a flow rate regulating device, where a detection point of the detection device is disposed at a fuel inlet of the buffer device, and a fuel outlet of the buffer device is connected to a fuel inlet of the fuel cell;
the flow rate regulating device is disposed at the fuel inlet of the fuel cell and controlled by the control device, and the fuel flows through the buffer device, the flow rate regulating device, and the fuel cell in sequence;
the control device is further configured to:
   determine buffer time required for the fuel to flow through the buffer device; and
   the controlling, based on the target fuel flow rate, a flow rate of the fuel delivered to the fuel cell includes:
      controlling the flow rate regulating device based on the target fuel flow rate and the buffer time to adjust a flow rate of the fuel at the fuel inlet of the fuel cell to the target fuel flow rate within the buffer time.

Optionally, the determining buffer time required for the fuel to flow through the buffer device includes:
determining the buffer time based on a distance from the fuel inlet of the buffer device to the fuel outlet of the buffer device, cross-sectional area of an inner cavity of the buffer device, and a current total flow rate of the fuel flowing through the buffer device.

Optionally, the determining the buffer time based on a distance from the fuel inlet of the buffer device to the fuel outlet of the buffer device, cross-sectional area of an inner cavity of the buffer device, and a current total flow rate of the fuel flowing through the buffer device includes:
calculating a buffer volume based on the distance and the cross-sectional area of the inner cavity; and
calculating a ratio of the buffer volume to the current total flow rate to characterize the buffer time.

According to a second aspect, an embodiment of the present disclosure provides a fuel cell control method, where fuel is delivered to a fuel cell for power generation, and fuel information obtained by a detection device by detecting the fuel includes a fuel calorific value and a fuel flow rate; and the fuel cell control method includes:
determining a target fuel flow rate at least based on a fuel calorific value at a current time point and a fuel flow rate at a previous time point; and
controlling, based on the target fuel flow rate, a flow rate of the fuel delivered to the fuel cell to control the power generation of the fuel cell.

According to a third aspect, an embodiment of the present disclosure provides a computer-readable storage medium, storing a computer program thereon, where the computer program is executed by a processor to perform the steps of the above fuel cell control method.

In conclusion, the embodiments of the present disclosure have at least the following beneficial effects:
According to the embodiments of the present disclosure, a target fuel flow rate is determined at least based on a fuel calorific value at a current time point and a fuel flow rate at a previous time point, and a flow rate of fuel delivered to a fuel cell is controlled based on a target fuel flow rate to control power generation of the fuel cell. This can adapt to real-time fluctuations of fuel components, timely adjust the flow rate of the fuel delivered to the fuel cell, and improve safety of the fuel cell during operation.

### BRIEF DESCRIPTION OF THE DRAWINGS

FIG. 1 is a schematic structural diagram of a fuel cell control system according to an embodiment of the present disclosure;
FIG. 2 is a schematic diagram of a fuel cell control system according to an embodiment of the present disclosure;
FIG. 3 is a schematic flowchart of a fuel cell control method according to an embodiment of the present disclosure; and
FIG. 4 is a schematic structural diagram of a fuel cell control system according to an embodiment of the present disclosure.

### DETAILED DESCRIPTION

The technical solutions in the embodiments of the present disclosure are clearly and completely described below with reference to the accompanying drawings in the embodiments of the present disclosure. Apparently, the described embodiments are only some rather than all of the embodiments of the present disclosure. All other embodiments obtained by those of ordinary skill in the art based on the embodiments of the present disclosure without creative efforts should fall within the protection scope of the present disclosure.

In the description of the present disclosure, the terms such as "first", "second", and "third" are only for the purpose of description and should not be construed as indicating or implying relative importance, or implicitly indicating a quantity of indicated technical features. Thus, features defined with "first", "second", and "third" may explicitly or implicitly include one or more of the features. In the description of the present disclosure, unless otherwise specified, "a plurality of" means two or more. In the description of the present disclosure, the term "include" and variations thereof should be understood as open inclusion, that is, "including but not limited to". The term "based on" should be understood as "at least partially based on". The term "according to" should be understood as "at least partially according to". The term "one embodiment" means "at least one embodiment", the term "another embodiment" means "at least another embodiment", and the term "some embodiments" means "at least some embodiments".

In the description of the present disclosure, it should be noted that, unless otherwise clearly specified and limited, meanings of terms "install", "connected with", and "connected to" should be understood in a broad sense. For example, the connection may be a fixed connection, a removable connection, or an integral connection; may be a mechanical connection or an electrical connection; may be a direct connection or an indirect connection by using an intermediate medium; or may be intercommunication between two components. Those of ordinary skill in the art can understand the specific meanings of the above terms in the present disclosure based on specific situations.

In the description of the present disclosure, it should be noted that unless otherwise defined, all technical and scientific terms used herein have the same meaning as commonly understood by those skilled in the technical field of the present disclosure. The terms used in the specification of the present disclosure are for the purpose of describing particular embodiments only and are not intended to limit the present disclosure. Those of ordinary skill in the art can understand the specific meanings of the above terms in the present disclosure based on specific situations.

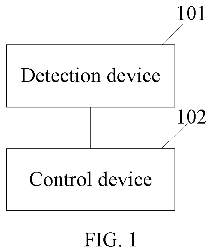

According to a first aspect, FIG. 1 is a schematic structural diagram of a fuel cell control system according to an embodiment of the present disclosure. The fuel cell control system includes:

A detection device 101 is configured to detect fuel information of fuel, where the fuel is delivered to a fuel cell for power generation, and the fuel information includes a fuel flow rate and a fuel calorific value.

It should be noted that the fuel information in this embodiment is fuel information detected at a detection point of the detection device 101. The detection point is generally disposed outside the fuel cell. In this case, "fuel information at a current time point" may characterize information of fuel that has not yet been delivered to the fuel cell at the current time point but is about to be delivered thereto, while "fuel information at a previous time point" may characterize information of fuel that has already been delivered to the fuel cell at the current time point. In this way, the information of the fuel not yet delivered to the fuel cell and the information of the fuel already delivered to the fuel cell can be obtained, facilitating subsequent adjustment of the fuel flow rate.

A control device 102 is communicatively connected to the detection device 101. The control device 102 is configured to:
determine a target fuel flow rate at least based on a fuel calorific value at the current time point and a fuel flow rate at the previous time point, where
in an example, at least the fuel calorific value at the current time point and the fuel flow rate at the previous time point may be input into a pre-trained artificial intelligence (AI) model for prediction, to acquire the target fuel flow rate, and the AI model can be trained by using a general training method; and
control, based on the target fuel flow rate, a flow rate of the fuel delivered to the fuel cell to control the power generation of the fuel cell.

It should be noted that the fuel information in this embodiment may include component information, flow rate information, and other information that are detected for the fuel, which can be used to characterize a real-time state of the fuel.

Since the fuel cell generates electric power by utilizing the fuel delivered thereto, a power generation process of the fuel cell can be controlled by adjusting the flow rate of the fuel delivered to the fuel cell. Exemplarily, in this embodiment, a fuel supply device can be controlled based on the target fuel flow rate to adjust the flow rate of the fuel delivered by the fuel supply device to the fuel cell, so as to control the fuel to be delivered to the fuel cell at the target fuel flow rate. The fuel supply device is configured to supply the fuel and is communicatively connected to the control device.

In an example, the detection device includes a calorimeter, and the calorimeter is at least provided with a component detection function.

It should be noted that the calorimeter in this embodiment at least has the component detection function. Herein, the calorimeter may have both the component detection function and a calorific value calculation function, or may have only the component detection function, where a calorific value is calculated by a control module (for example, a controller). In addition, exemplarily, the detection device may further include a device for detecting the fuel flow rate, and in this case, the fuel information may also include the flow rate of the fuel delivered to the fuel cell.

In an example, the component information of the fuel may include components such as methane, ethane, propane, butane, multi-carbon hydrocarbons, and/or hydrogen, as well as a content proportion of each component. In this way, the fuel calorific value can be calculated based on calorific value data corresponding to each component and the content proportion of each component, where the calorific value data is a calorific value of the component. For example, if a calorific value of the methane is 10 with a content proportion of 90%, and a calorific value of the ethane is 20 with a content proportion of 10%, a fuel calorific value under such components is calculated as follows: 10×90%+20×10%=11.

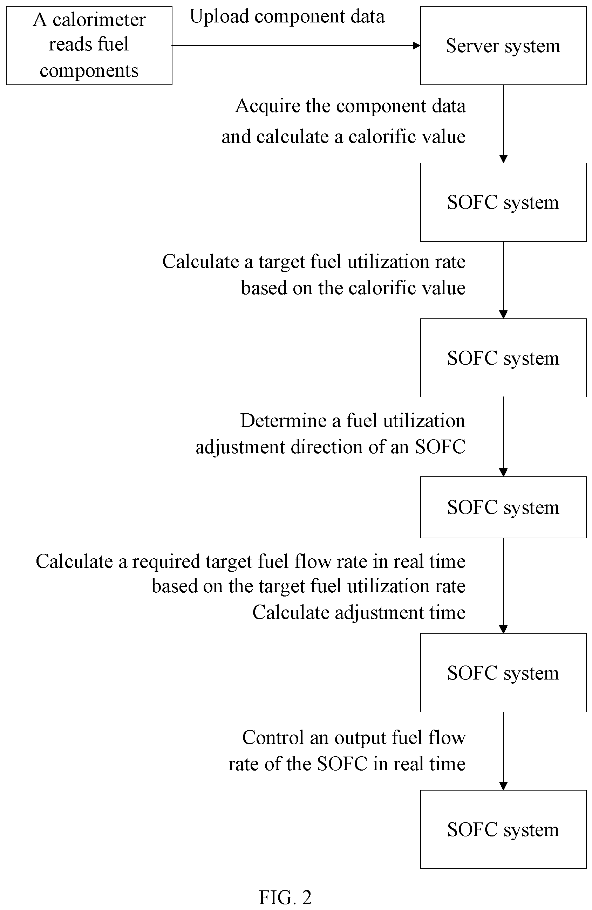

In some embodiments, referring to FIG. 2, the control device may be an SOFC system. In this case, the detection device (such as the calorimeter therein) may be communicatively connected to the SOFC system through a server system (for example, a cloud end).

In an optional implementation, the determining a target fuel flow rate at least based on a fuel calorific value at the current time point and a fuel flow rate at the previous time point includes:
calculating a first product of a fuel calorific value at the previous time point and the fuel flow rate at the previous time point; and
determining the target fuel flow rate based on a ratio between the fuel calorific value at the current time point and the first product.

It can be understood that in a normal case, the system generally operates in a steady state. Accordingly, a system state at the previous time point can be regarded as a steady operating state of the system. If there is a component change, the fuel calorific value at the current time point fluctuates relative to the fuel calorific value at the previous time point, thereby affecting operation of the system. Therefore, a principle of a method for calculating the target fuel flow rate is as follows: When the fuel calorific value at the current time point is less than the fuel calorific value at the previous time point, the flow rate of the fuel delivered to the fuel cell is increased to the target fuel flow rate, to prevent an excessively low calorific value from causing damage to the system. When the fuel calorific value at the current time point is greater than the fuel calorific value at the previous time point, the flow rate of the fuel delivered to the fuel cell is reduced to the target fuel flow rate, to avoid an excessively high calorific value from causing excessive thermal impact to the fuel cell and shortening service lives of a heat exchanger and a burner.

The method for calculating the target fuel flow rate is expressed as follows: $V 2 = \frac{W 2}{Q 2 ∗ \frac{W 1}{Q 1 V 1}} = \frac{Q 1 V 1}{Q 2}$
where W1 and W2 respectively represent an output power of the fuel cell at the previous time point and an output power of the fuel cell at the current time point, where it is generally regarded that W1=W2; Q1 represents the fuel calorific value at the previous time point; V1 represents the fuel flow rate at the previous time point; Q2 represents the fuel calorific value at the current time point; and V2 represents the target fuel flow rate.

According to the above formula, a degree of a change required from the fuel flow rate at the previous time point to the target fuel flow rate can be obtained based on a degree of a calorific value change, to obtain the target fuel flow rate and prevent the damage to the system.

In an optional implementation, the control device is further configured to:
determine a target fuel utilization rate and the output power of the fuel cell at the current time point, where the target fuel utilization rate includes a maximum allowable fuel utilization rate corresponding to the fuel cell or a preset fuel utilization rate during normal operation of the fuel cell.

It can be understood that the maximum allowable fuel utilization rate in this embodiment is a fuel utilization rate at which the fuel cell operates based on the fuel delivered thereto without causing damage to a stack of the fuel cell when the fuel is delivered to the fuel cell, and may further be understood as a maximum fuel utilization rate permitted during operation of the fuel cell.

The determining a target fuel flow rate at least based on a fuel calorific value at the current time point and a fuel flow rate at the previous time point includes the following operations:
A current fuel utilization rate of the fuel is determined based on the fuel calorific value at the current time point, the fuel flow rate at the previous time point, and the output power of the fuel cell at the current time point.

It should be noted that the current fuel utilization rate in this embodiment is used to characterize a fuel utilization rate corresponding to the fuel that has not yet been delivered to the fuel cell at the current time point.

Further, in some specific examples, the current fuel utilization rate *U*_{*f*2} can be expressed by the following formula: ${U}_{f 2} = \frac{W 2}{Q 2 ∗ V 1}$
where V1 represents the fuel flow rate at the previous time point, Q2 represents the fuel calorific value at the current time point, and W2 represents the output power of the fuel cell at the current time point.

It can be seen from the above formula that the current fuel utilization rate is a utilization rate of the fuel that is delivered to the fuel cell operating under the current output power, based on the fuel flow rate at the previous time point and the fuel calorific value at the current time point.

In a case that the target fuel utilization rate is the maximum allowable fuel utilization rate, if the current fuel utilization rate is greater than the maximum allowable fuel utilization rate, the target fuel flow rate is determined based on the fuel calorific value at the current time point, the target fuel utilization rate, and the output power of the fuel cell at the current time point; or if the current fuel utilization rate is less than or equal to the maximum allowable fuel utilization rate, a fuel flow rate at the previous time point is taken as the target fuel flow rate.

In this embodiment, the current fuel utilization rate is compared with the maximum allowable fuel utilization rate. If the current fuel utilization rate is greater than the maximum allowable fuel utilization rate, it indicates that, under the fuel calorific value at the current time point, delivering the fuel to a fuel cell system based on the fuel flow rate at the current time point results in an excessively high fuel utilization rate of the fuel cell. This may easily cause a stack module of the system to operate in a fuel over-utilization state, resulting in stack damage. Therefore, when the current fuel utilization rate is greater than the maximum allowable fuel utilization rate, the target fuel flow rate is obtained according to the following formula: $V 2 = \frac{W 2}{Q 2 ∗ {U}_{fmax}}$
where V2 represents the target fuel flow rate, *U_{fmax}* represents the target fuel utilization rate (namely, the maximum allowable fuel utilization rate of the fuel cell), Q2 represents the fuel calorific value at the current time point, and W2 represents the output power of the fuel cell at the current time point.

During the operation of the fuel cell, an operating power may fluctuate or needs to be adjusted at a given time point. Therefore, the operation of the fuel cell is affected by two factors, namely the fuel calorific value and a fuel power. Both a power fluctuation and a calorific value fluctuation may result in the excessively high fuel utilization rate. Different powers correspond to respective optimal fuel utilization rate ranges. Therefore, a corresponding maximum allowable fuel utilization rate can be first obtained based on a detected power. Then the current fuel utilization rate under the fuel calorific value at the current time point is calculated. If the current fuel utilization rate is greater than the maximum allowable fuel utilization rate, it indicates that the currently delivered fuel is not suitable for the operation of the fuel cell system, which may easily cause the stack module to operate in the fuel over-utilization state, resulting in the stack damage. Therefore, the fuel flow rate is adjusted based on the maximum allowable fuel utilization rate to adapt to changes in factors such as the fuel calorific value, so as to prevent the fuel cell system from being in the fuel over-utilization state.

In a case that the target fuel utilization rate is the preset fuel utilization rate, if the current fuel utilization rate is not equal to the preset fuel utilization rate, the target fuel flow rate is determined based on the fuel calorific value at the current time point, the target fuel utilization rate, and the output power of the fuel cell at the current time point.

It can be understood that the preset fuel utilization rate in this embodiment is a fuel utilization rate at which the fuel cell can achieve a required power without damaging its stack during the operation when the fuel is delivered to the fuel cell based on current fuel information. The maximum allowable fuel utilization rate may be an upper limit range value, while the preset fuel utilization rate may be a specific set range value.

It is not difficult to understand that if the preset fuel utilization rate is not equal to the current fuel utilization rate of the fuel cell, the target fuel flow rate may be determined in accordance with this embodiment to adjust an output of the fuel. If the preset fuel utilization rate is equal to the current fuel utilization rate of the fuel cell, the output of the fuel does not need to be adjusted. A reason is that, when the preset fuel utilization rate is not equal to the current fuel utilization rate of the fuel cell, if the target fuel utilization rate is greater than the current fuel utilization rate and the fuel utilization rate is not increased, the fuel imposes the excessive thermal impact on the fuel cell when being delivered to the fuel cell, thereby shortening the service lives of the heat exchanger and the burner. If the target fuel utilization rate is less than the current fuel utilization rate and the fuel utilization rate is not reduced, the fuel cell operates at a fuel utilization rate exceeding its operational upper limit, which may cause local overheating of the stack. This damages a sealing structure and an electrode material of the stack and further results in the stack damage due to fuel over-utilization.

In this case, the target fuel flow rate can be obtained according to the following formula: $V 2 = \frac{W 2}{Q 2 ∗ {U}_{fmax}}$
where V2 represents the target fuel flow rate, *U_{fmax}* represents the target fuel utilization rate (namely, the preset fuel utilization rate of the fuel cell), Q2 represents the fuel calorific value at the current time point, and W2 represents the output power of the fuel cell at the current time point.

In an optional implementation, that a current fuel utilization rate of the fuel is determined based on the fuel calorific value at the current time point, the fuel flow rate at the previous time point, and the output power of the fuel cell at the current time point includes:
calculating a second product of the fuel calorific value at the current time point and the fuel flow rate at the previous time point; and
determining the current fuel utilization rate of the fuel based on a ratio of the output power of the fuel cell at the current time point to the second product; and
that the target fuel flow rate is determined based on the fuel calorific value at the current time point, the target fuel utilization rate, and the output power of the fuel cell at the current time point includes:
   calculating a third product of the fuel calorific value at the current time point and the target fuel utilization rate; and
   determining the target fuel flow rate based on a ratio of the output power of the fuel cell at the current time point to the third product.

In an optional implementation, the control device is further configured to:
determine a minimum allowable flow rate corresponding to the fuel cell; and
the controlling, based on the target fuel flow rate, a flow rate of the fuel delivered to the fuel cell includes:
   controlling, based on a comparison result between the minimum allowable flow rate and the target fuel flow rate, the flow rate of the fuel delivered to the fuel cell, where if the target fuel flow rate is less than the fuel flow rate, the fuel is controlled to be delivered to the fuel cell at the minimum allowable flow rate; otherwise, the fuel is controlled to be delivered to the fuel cell at the target fuel flow rate.

In this embodiment, if the flow rate is reduced based on the calorific value change to avoid an excessively low fuel utilization rate, the fuel cell may, due to an excessively low fuel flow rate, cause uneven fuel reception among various stack modules when the fuel is distributed to the stack modules. For example, some stacks may receive only a very small fuel flow rate input or even no fuel flow rate input at all, which can easily cause damage to the stacks.

Therefore, when the fuel calorific value changes such that the flow rate of the fuel delivered to the fuel cell needs to be reduced to the target fuel flow rate, the target fuel flow rate is first compared with the minimum allowable flow rate. If the target fuel flow rate is less than the minimum allowable flow rate, the fuel is delivered to the fuel cell based on the minimum allowable flow rate. This prevents the flow rate of the fuel delivered to the fuel cell from being less than the minimum allowable flow rate, thereby avoiding damage caused by uneven fuel delivery to each stack in the fuel cell system.

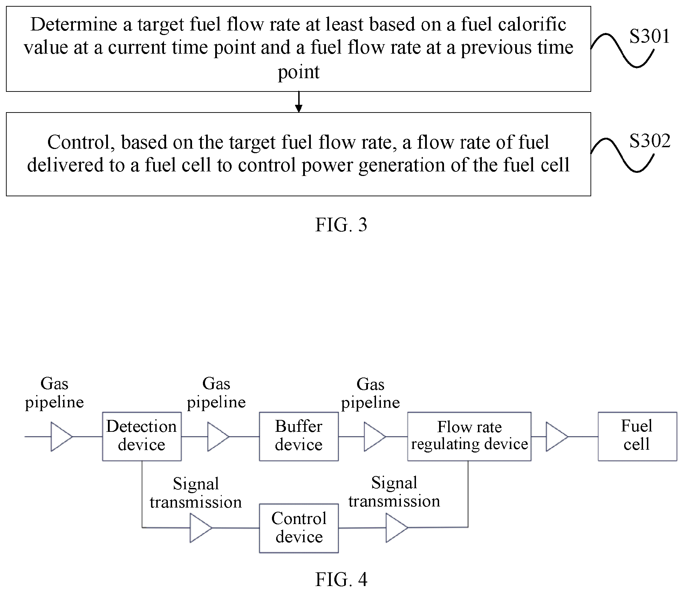

Referring to FIG. 4, in an optional implementation, the fuel cell control system further includes a buffer device and a flow rate regulating device. The detection point of the detection device is disposed at a fuel inlet of the buffer device, and a fuel outlet of the buffer device is connected to a fuel inlet of the fuel cell.

The flow rate regulating device is disposed at the fuel inlet of the fuel cell and controlled by the control device to adjust a flow rate of the fuel at the fuel inlet of the fuel cell, so as to adjust the flow rate of the fuel delivered to the fuel cell, and the fuel flows through the buffer device, the flow rate regulating device, and the fuel cell in sequence.

The control device is further configured to:
determine buffer time required for the fuel to flow through the buffer device, where exemplarily, the buffer time may be preset based on relevant parameters of the buffer device, and the buffer time is used to represent a time period for a flow rate change, and may be understood as a time period required to adjust the flow rate of the fuel delivered to the fuel cell from the fuel flow rate at the current time point to the target fuel flow rate.

The controlling, based on the target fuel flow rate, a flow rate of the fuel delivered to the fuel cell includes:
controlling the flow rate regulating device based on the target fuel flow rate and the buffer time to adjust the flow rate of the fuel at the fuel inlet of the fuel cell to the target fuel flow rate within the buffer time.

It can be understood that if the detection device and the flow rate regulating device are disposed at a same position, abrupt adjustment of an output fuel flow rate in response to a fluctuation of a fuel component may cause impact and damage to the fuel cell. In addition, due to a time deviation between regulation and detection, within a given time period, the fuel calorific value does not correspond to the target fuel flow rate but corresponds to the fuel flow rate at the current time point, which may result in system damage caused by the calorific value change. Therefore, in some examples, when the calorific value change is determined, that is, when the current fuel utilization rate is greater than the maximum allowable fuel utilization rate or is not equal to the preset fuel utilization rate, optimal adjustment time (namely, the buffer time) can be calculated, such that the fuel is delivered to the fuel cell within sufficiently long buffer time, thereby reducing the impact on the fuel cell.

Where,
if time of adjusting the output fuel flow rate to the target fuel flow rate (which is determined by the buffer time and acts on the flow rate regulating device) is less than target time, 1) when the current fuel utilization rate is less than the preset fuel utilization rate, it means that the fuel flow rate decreases prematurely, which causes the excessive thermal impact to the fuel cell and shortens the service lives of the heat exchanger and the burner. 2) When the current fuel utilization rate is greater than the preset fuel utilization rate, it means that the fuel flow rate rises prematurely, which causes the stack modules to operate in the fuel over-utilization state, resulting in the stack damage.

If the time of adjusting the output fuel flow rate to the target fuel flow rate is greater than the target time, 1) when the current fuel utilization rate is less than the preset fuel utilization rate, it means that the fuel flow rate decreases with a delay, which causes the excessive thermal impact to the fuel cell and shortens the service lives of the heat exchanger and the burner. 2) When the current fuel utilization rate is greater than the preset fuel utilization rate, it means that the fuel flow rate rises with a delay, which causes the stack modules to operate in the fuel over-utilization state, resulting in the stack damage.

In an optional implementation, the determining buffer time required for the fuel to flow through the buffer device includes:
determining the buffer time based on a distance from the fuel inlet of the buffer device to the fuel outlet of the buffer device, cross-sectional area of an inner cavity of the buffer device, and a current total flow rate of the fuel flowing through the buffer device.

In an optional implementation, the determining the buffer time based on a distance from the fuel inlet of the buffer device to the fuel outlet of the buffer device, cross-sectional area of an inner cavity of the buffer device, and a current total flow rate of the fuel flowing through the buffer device includes:
calculating a buffer volume based on the distance and the cross-sectional area of the inner cavity; and
calculating a ratio of the buffer volume to the current total flow rate to characterize the buffer time.

In some specific examples, for ease of understanding, the following uses a case where the cross-sectional area of the inner cavity remains unchanged as an illustrative example. In this case, the buffer time can be determined according to the following formula: $t = \frac{L ∗ A}{V 3}$
where *t* represents the buffer time, *L* represents the distance from the fuel inlet of the buffer device to the fuel outlet of the buffer device, *A* represents the cross-sectional area of the inner cavity, and *V*3 represents the current total flow rate.

Further, there may be n fuel cells, where n is an integer greater than or equal to 1; and n fuel outlets of the buffer device are respectively connected to fuel inlets of the n fuel cells.

In this case, the determining the buffer time based on a distance from the fuel inlet of the buffer device to the fuel outlet of the buffer device, cross-sectional area of an inner cavity of the buffer device, and a current total flow rate of the fuel flowing through the buffer device may include:
for each fuel cell, calculating corresponding buffer time of the fuel cell based on a distance from the fuel inlet of the buffer device to a fuel outlet that is of the buffer device and connected to the fuel cell, the cross-sectional area of the inner cavity of the buffer device, and the current total flow rate of the fuel flowing through the buffer device.

For example, a current flow rate of an n^{th} fuel cell is denoted as *Xn*. Therefore, the current total flow rate *V*3 can be expressed as follows: $V 3 = X 1 + X 2 + … . . + Xn$

In this case, buffer time *tn* corresponding to the n^{th} fuel cell is as follows: $tn = \frac{Ln ∗ A}{V 3}$, where *Ln* represents a distance from the fuel inlet of the buffer device to a fuel outlet that is of the buffer device and connected to the n^{th} fuel cell, *A* represents the cross-sectional area of the inner cavity, and *V*3 represents the current total flow rate.

In an optional implementation, the buffer device includes a fuel delivery pipeline or a buffer tank.

In an example, that the flow rate regulating device adjusts a flow rate of the fuel at the fuel inlet of the fuel cell to the target fuel flow rate within the buffer time includes:
by taking a time point at which the fuel calorific value at the current time point is detected as initial time t, and taking time required for the fuel to flow through the buffer device and reach the fuel cell as the buffer time T, adjusting the flow rate of the fuel at the fuel inlet of the fuel cell from the initial time t, till the flow rate of the fuel at the fuel inlet of the fuel cell is precisely adjusted to the target fuel flow rate at end time t+T.

It should be noted that when the current fuel utilization rate is not equal to the preset fuel utilization rate, the flow rate regulating device needs to be controlled to adjust the flow rate of the fuel at the fuel inlet of the fuel cell to the target fuel flow rate. The flow rate regulating device may adjust the flow rate of the fuel at the fuel inlet of the fuel cell from the initial time to the target fuel flow rate at the end time based on an instruction function (a control instruction issued by the control device). A flow velocity of the fuel is controlled to reduce a speed at which the fuel is delivered to the fuel cell, and avoid the system damage caused by a change in the fuel component.

In an example, the flow rate regulating device may include a flow valve. A flow rate that is of the fuel and output through the flow valve can be adjusted by controlling an opening degree of the flow rate regulating device based on the target fuel flow rate.

In the embodiments of the present disclosure, the control device may be one or more processors, controllers, or chips that each have a communication interface, can realize a communication protocol, and may further include a memory, a related interface and system transmission bus, and the like if necessary. The processor, the controller, or the chip executes program-related code to realize a corresponding function.

According to a second aspect, FIG. 3 is a schematic flowchart of a fuel cell control method according to an embodiment of the present disclosure, where fuel is delivered to a fuel cell for power generation, and fuel information obtained by a detection device by detecting the fuel includes a fuel calorific value and a fuel flow rate. The fuel cell control method specifically includes the following steps S301 and S302:
S301: Determine a target fuel flow rate at least based on a fuel calorific value at a current time point and a fuel flow rate at a previous time point.

S302: Control, based on the target fuel flow rate, a flow rate of the fuel delivered to the fuel cell to control the power generation of the fuel cell.

In an optional implementation, the determining a target fuel flow rate at least based on a fuel calorific value at the current time point and a fuel flow rate at the previous time point includes:
calculating a first product of a fuel calorific value at the previous time point and the fuel flow rate at the previous time point; and
determining the target fuel flow rate based on a ratio between the fuel calorific value at the current time point and the first product.

In an optional implementation, the fuel cell control method further includes:
determining a target fuel utilization rate and an output power of the fuel cell at the current time point, where the target fuel utilization rate includes a maximum allowable fuel utilization rate corresponding to the fuel cell or a preset fuel utilization rate during normal operation of the fuel cell; and
the determining a target fuel flow rate at least based on a fuel calorific value at a current time point and a fuel flow rate at a previous time point includes:
determining a current fuel utilization rate of the fuel based on the fuel calorific value at the current time point, the fuel flow rate at the previous time point, and the output power of the fuel cell at the current time point; and
in a case that the target fuel utilization rate is the maximum allowable fuel utilization rate, if the current fuel utilization rate is greater than the maximum allowable fuel utilization rate, determining the target fuel flow rate based on the fuel calorific value at the current time point, the target fuel utilization rate, and the output power of the fuel cell at the current time point; or if the current fuel utilization rate is less than or equal to the maximum allowable fuel utilization rate, taking a fuel flow rate at the current time point as the target fuel flow rate; or
in a case that the target fuel utilization rate is the preset fuel utilization rate, if the current fuel utilization rate is not equal to the preset fuel utilization rate, determining the target fuel flow rate based on the fuel calorific value at the current time point, the target fuel utilization rate, and the output power of the fuel cell at the current time point.

In an optional implementation, the determining a current fuel utilization rate of the fuel based on the fuel calorific value at the current time point, the fuel flow rate at the previous time point, and the output power of the fuel cell at the current time point includes:
calculating a second product of the fuel calorific value at the current time point and the fuel flow rate at the previous time point; and
determining the current fuel utilization rate of the fuel based on a ratio of the output power of the fuel cell at the current time point to the second product; and
the determining the target fuel flow rate based on the fuel calorific value at the current time point, the target fuel utilization rate, and the output power of the fuel cell at the current time point includes:
   calculating a third product of the fuel calorific value at the current time point and the target fuel utilization rate; and
   determining the target fuel flow rate based on a ratio of the output power of the fuel cell at the current time point to the third product.

In an optional implementation, the fuel cell control method further includes:
determining a minimum allowable flow rate corresponding to the fuel cell; and
the controlling, based on the target fuel flow rate, a flow rate of the fuel delivered to the fuel cell includes:
   controlling, based on a comparison result between the minimum allowable flow rate and the target fuel flow rate, the flow rate of the fuel delivered to the fuel cell, where if the target fuel flow rate is less than the fuel flow rate, the fuel is controlled to be delivered to the fuel cell at the minimum allowable flow rate; otherwise, the fuel is controlled to be delivered to the fuel cell at the target fuel flow rate.

In an optional implementation, a detection point of the detection device is disposed at a fuel inlet of a buffer device, and a fuel outlet of the buffer device is connected to a fuel inlet of the fuel cell;
a flow rate regulating device is disposed at the fuel inlet of the fuel cell, and the fuel flows through the buffer device, the flow rate regulating device, and the fuel cell in sequence;
the fuel cell control method further includes:
   determine buffer time required for the fuel to flow through the buffer device; and
   the controlling, based on the target fuel flow rate, a flow rate of the fuel delivered to the fuel cell includes:
      controlling the flow rate regulating device based on the target fuel flow rate and the buffer time to adjust a flow rate of the fuel at the fuel inlet of the fuel cell to the target fuel flow rate within the buffer time.

In an optional implementation, the determining buffer time required for the fuel to flow through the buffer device includes:
determining the buffer time based on a distance from the fuel inlet of the buffer device to the fuel outlet of the buffer device, cross-sectional area of an inner cavity of the buffer device, and a current total flow rate of the fuel flowing through the buffer device.

In an optional implementation, the determining the buffer time based on a distance from the fuel inlet of the buffer device to the fuel outlet of the buffer device, cross-sectional area of an inner cavity of the buffer device, and a current total flow rate of the fuel flowing through the buffer device includes:
calculating a buffer volume based on the distance and the cross-sectional area of the inner cavity; and
calculating a ratio of the buffer volume to the current total flow rate to characterize the buffer time.

According to a third aspect, an embodiment of the present disclosure provides a computer-readable storage medium on which a computer program is stored. The computer program is executed by a processor to implement the steps of the fuel cell control method in any one of the above embodiments.

Exemplarily, the computer-readable storage medium is a non-transitory computer-readable storage medium.

In conclusion, the embodiments of the present disclosure have at least the following beneficial effects:
According to the embodiments of the present disclosure, a target fuel flow rate is determined at least based on a fuel calorific value at a current time point and a fuel flow rate at a previous time point, and a flow rate of fuel delivered to a fuel cell is controlled based on a target fuel flow rate to control power generation of the fuel cell. This can adapt to real-time fluctuations of fuel components, timely adjust the flow rate of the fuel delivered to the fuel cell, and improve safety of the fuel cell during operation.

Through the description of the above implementations, those skilled in the art can clearly understand that the present disclosure may be implemented by means of software plus a necessary universal hardware platform, and may also be implemented by means of hardware. Based on such understanding, all or part of the contributions made by the technical solutions of the present disclosure to the background art may be embodied as a software product. The computer software product may be stored in a storage medium, such as a read-only memory (ROM)/random-access memory (RAM), a magnetic disk, or an optical disk, and includes a plurality of instructions for instructing a computer device (which may be a personal computer, a server, or a network device) to implement the method in the embodiments of the present disclosure or parts of the embodiments.

The above merely describes preferred implementations of the present disclosure. It should be noted that improvements and modifications can be made by those of ordinary skill in the art without departing from the principles of the present disclosure, and these improvements and modifications should also be considered as falling within the protection scope of the present disclosure.

## Claims

1. A fuel cell control system, comprising:
a detection device configured to detect fuel information of fuel, wherein the fuel is delivered to a fuel cell for power generation, and the fuel information comprises a fuel flow rate and a fuel calorific value; and
a control device communicatively connected to the detection device, wherein the control device is configured to:
determine a target fuel flow rate at least based on a fuel calorific value at a current time point and a fuel flow rate at a previous time point; and
control, based on the target fuel flow rate, a flow rate of the fuel delivered to the fuel cell to control the power generation of the fuel cell.

2. The fuel cell control system according to claim 1, wherein the determining a target fuel flow rate at least based on a fuel calorific value at a current time point and a fuel flow rate at a previous time point comprises:
calculating a first product of a fuel calorific value at the previous time point and the fuel flow rate at the previous time point; and
determining the target fuel flow rate based on a ratio between the fuel calorific value at the current time point and the first product.

3. The fuel cell control system according to claim 1, wherein the control device is further configured to:
determine a target fuel utilization rate and an output power of the fuel cell at the current time point, wherein the target fuel utilization rate comprises a maximum allowable fuel utilization rate corresponding to the fuel cell or a preset fuel utilization rate during normal operation of the fuel cell; and
the determining a target fuel flow rate at least based on a fuel calorific value at a current time point and a fuel flow rate at a previous time point comprises:
determining a current fuel utilization rate of the fuel based on the fuel calorific value at the current time point, the fuel flow rate at the previous time point, and the output power of the fuel cell at the current time point; and
in a case that the target fuel utilization rate is the maximum allowable fuel utilization rate, in response to that the current fuel utilization rate is greater than the maximum allowable fuel utilization rate, determining the target fuel flow rate based on the fuel calorific value at the current time point, the target fuel utilization rate, and the output power of the fuel cell at the current time point; or in response to that the current fuel utilization rate is less than or equal to the maximum allowable fuel utilization rate, taking a fuel flow rate at the current time point as the target fuel flow rate; or
in a case that the target fuel utilization rate is the preset fuel utilization rate, in response to that the current fuel utilization rate is not equal to the preset fuel utilization rate, determining the target fuel flow rate based on the fuel calorific value at the current time point, the target fuel utilization rate, and the output power of the fuel cell at the current time point.

4. The fuel cell control system according to claim 3, wherein
the determining a current fuel utilization rate of the fuel based on the fuel calorific value at the current time point, the fuel flow rate at the previous time point, and the output power of the fuel cell at the current time point comprises:
calculating a second product of the fuel calorific value at the current time point and the fuel flow rate at the previous time point; and
determining the current fuel utilization rate of the fuel based on a ratio of the output power of the fuel cell at the current time point to the second product; and
the determining the target fuel flow rate based on the fuel calorific value at the current time point, the target fuel utilization rate, and the output power of the fuel cell at the current time point comprises:
calculating a third product of the fuel calorific value at the current time point and the target fuel utilization rate; and
determining the target fuel flow rate based on a ratio of the output power of the fuel cell at the current time point to the third product.

5. The fuel cell control system according to any one of claims 1 to 4, wherein the control device is further configured to:
determine a minimum allowable flow rate corresponding to the fuel cell; and
the controlling, based on the target fuel flow rate, a flow rate of the fuel delivered to the fuel cell comprises:
controlling, based on a comparison result between the minimum allowable flow rate and the target fuel flow rate, the flow rate of the fuel delivered to the fuel cell, wherein in response to that the target fuel flow rate is less than the fuel flow rate, the fuel is controlled to be delivered to the fuel cell at the minimum allowable flow rate; otherwise, the fuel is controlled to be delivered to the fuel cell at the target fuel flow rate.

6. The fuel cell control system according to any one of claims 1 to 4, further comprising a buffer device and a flow rate regulating device, wherein a detection point of the detection device is disposed at a fuel inlet of the buffer device, and a fuel outlet of the buffer device is connected to a fuel inlet of the fuel cell;
the flow rate regulating device is disposed at the fuel inlet of the fuel cell and controlled by the control device, and the fuel flows through the buffer device, the flow rate regulating device, and the fuel cell in sequence;
the control device is further configured to:
determine buffer time required for the fuel to flow through the buffer device; and
the controlling, based on the target fuel flow rate, a flow rate of the fuel delivered to the fuel cell comprises:
controlling the flow rate regulating device based on the target fuel flow rate and the buffer time to adjust a flow rate of the fuel at the fuel inlet of the fuel cell to the target fuel flow rate within the buffer time.

7. The fuel cell control system according to claim 6, wherein the determining buffer time required for the fuel to flow through the buffer device comprises:
determining the buffer time based on a distance from the fuel inlet of the buffer device to the fuel outlet of the buffer device, cross-sectional area of an inner cavity of the buffer device, and a current total flow rate of the fuel flowing through the buffer device.

8. The fuel cell control system according to claim 7, wherein the determining the buffer time based on a distance from the fuel inlet of the buffer device to the fuel outlet of the buffer device, cross-sectional area of an inner cavity of the buffer device, and a current total flow rate of the fuel flowing through the buffer device comprises:
calculating a buffer volume based on the distance and the cross-sectional area of the inner cavity; and
calculating a ratio of the buffer volume to the current total flow rate to characterize the buffer time.

9. A fuel cell control method, wherein fuel is delivered to a fuel cell for power generation, and fuel information obtained by a detection device by detecting the fuel comprises a fuel calorific value and a fuel flow rate; and the fuel cell control method comprises:
determining a target fuel flow rate at least based on a fuel calorific value at a current time point and a fuel flow rate at a previous time point; and
controlling, based on the target fuel flow rate, a flow rate of the fuel delivered to the fuel cell to control the power generation of the fuel cell.

10. A computer-readable storage medium, storing a computer program thereon, wherein the computer program is executed by a processor to implement the fuel cell control method according to claim 9.
